# EUROPEAN PATENT APPLICATION

(11) **EP 1 621 261 A1**
(43) Date of publication of application: **01.02.2006**
(21) Application number: 05254433.5
(22) Date of filing: 15.07.2005
(51) Int. Cl.: B07C 5/06, A22C 11/00

(54) **Stick food sorting device and manufacturing apparatus of stick food**

(30) Priority: 26.07.2004 JP 2004217314; 24.01.2005 JP 2005015184
(71) Applicant: Takumigiken Co., Ltd, Wakayama-shi Wakayama (JP)
(72) Inventor: Yoshitaka, Nishimoto, Wakayama-shi Wakayama (JP); Iwasaki, Katsuya, Wakayama-Shi Wakayama (JP); Tamaki, Kanji, Wakayama-shi Wakayama (JP)
(74) Representative: White, Duncan Rohan

(57) **Abstract**

A sorting device (3) for sorting sticks of food comprising conveying means (41) including a transfer path (41b) for conveying food pieces S1 obtained by cutting linked food pieces connected together with tied portions S2 therebetween at the tied portions using a cutting device (2). A sorting means (4) is provided for sorting defective food from non-defective food pieces conveyed by the conveying means (41), wherein the width of the transfer path (41b) of the conveying means (41) is lager than the diameter of the food piece as well as smaller than the longitudinal length of the food piece, and the sorting means sorts out an insufficiently cut product in which two or more food pieces are connected together with tied portions therebetween.

## Description

The present invention relates to a sorting device for sorting a defective piece of food from sticks of food, which is mainly a sausage produced from linked sausages. For example, the invention relates to a sorting device for sorting two or more sausages linked together with tied portions therebetween due to insufficient cutting, or for selecting a sausage with a predetermined length from sausages separated by cutting the tied portions, and it relates to a manufacturing apparatus of the stick food using the sorting device.

### 2. Description of the Related Art

For manufacturing sausages as an example of items of food hereinafter referred to as "stick food", first, by a meat filling machine, a casing (gut) is filled with raw materials (minced meat); then, by twisting the casing at predetermined intervals, tied portions are formed and raw sausages are concatenated together via the tied portions so as to form raw linked sausages. Next, the raw linked sausages are spirally looped around a smoking rod, and stacked on a carriage to enter a smoking room; wherein the raw linked sausages are smoked (heated); after the smoking processing, the carriage is taken out of the smoking room and the smoked linked sausages are cut at the tied portions using a cutting device so as to have a separated individual sausage.

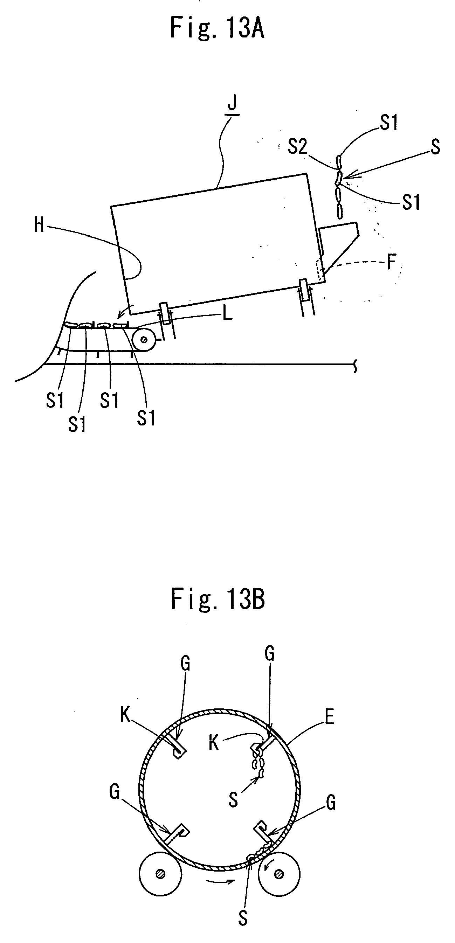

As the cutting device used the sausage manufacturing, as shown in Fig. 13A, a cutting device J has been available in market in that the linked sausages S are fed into a rotary drum E with a rotating shaft inclined to the horizontal plane from an inlet F arranged in the rotary drum E at the higher side of the inclination; within the rotary drum E, a flat blade cutter (not shown) supported to a cutter support fixture G cuts only the tied portions connecting sausages S1 of the linked sausages S together in accordance with the rotation of the rotary drum E so as to discharge the cut sausage S from a discharge outlet H arranged at the lower side of the inclination (see Japanese Patent Publication No. 50-17551).

That is, each cutter support fixture G, as shown in Fig. 13B, is provided with a notch k that permits the tied portion S2 to enter while it does not permit the sausage S1 of the linked sausages S to enter. In the inmost portion of the notch k, the flat blade cutter like a blade for safety razor is mounted. The support fixtures G are detachably fixed in the rotary drum E directing the notches k in the same rotating direction and spaced from the adjacent support fixture G at a predetermined pitch so as to be arranged in the peripheral and axial directions of the rotary drum E. However, in the cutting device J mentioned above, while cutting the sausages, among the obtained sausages, some insufficiently cut products, in which two or more sausages are connected together via the tied portions S2 are sometimes left.

Thus, in the past, the sausages S1 discharged from the discharge outlet H are screened by visual observation while being conveyed to back end processes such as packaging via a transfer path L, or while being entered once to a storage tank through the transfer path L before packaging. At this time, only the sausage S1 normally cut at both-sides of the tied portions is packaged as a product so as to ship it, while insufficiently cut sausages are returned to the cutting device again. In the selection by the visual observation, there may be errors by oversight and a worker for selecting is required, resulting in increased cost.

When the sausage S1 is cut and separated, the separated sausage S1 may break by mistake during the operation. Also, in the state of the linked sausage S, the tied portion may be untwisted so that the sausages adjacent to each other are connected together so as to form one longer sausage. Thus, before the sausages S1 are packed in a bag, the sausages with different lengths must be sorted out of the sausages with proper lengths.

Thus, the selection has been conventionally performed by visual observation; however, this is inefficiently taking time as well as unskilled workers may mistake the selection.

### SUMMARY OF THE INVENTION

The present invention has been made in view of the situation described above, and it is an object thereof to provide a sorting device of stick food capable of automatically selecting insufficient-cut stick food from normally-cut food at tied portions and capable of securely sorting stick food with a predetermined length from stick food having stick food with different lengths mixed therewith, and to provide a manufacturing apparatus of stick food using the sorting device.

In order to achieve the object described above, a stick food sorting device according to an aspect of the present invention includes conveying means for conveying stick food pieces obtained by cutting linked food pieces connected together with tied portions therebetween at the tied portions using a cutting device; and sorting means for sorting defective food from the stick food pieces conveyed by the conveying means (transfer path).

Preferably, the width of the transfer path of the conveying means is lager than the diameter of the stick food piece as well as smaller than the longitudinal length of the stick food piece, and the sorting means sorts out an insufficient cut product in which two or more stick food pieces are connected together with tied portions therebetween.

Preferably, the sorting means is arranged in a direction perpendicular to the conveying direction of the transfer path at a position located upstream of the transfer path from a future dropping position of the stick food piece fed from an outlet of the transfer path as well as at a future dropping position of the insufficiently cut product, and the sorting means includes a sorting roller with the upper end rotating toward upstream of the transfer path.

Preferably, the stick food sorting device further includes a comb receiving unit disposed on the outlet side of the transfer path 41b and having a plurality of trough transfer paths arranged in parallel for receiving tied portions of the insufficiently cut product fed from the outlet side of the transfer path in a stretching state across two trough transfer paths so as to prevent the insufficiently cut product from mixing with the stick food pieces fed from the transfer path as well as to allow the insufficiently cut product to flow together with the insufficiently cut product sorted by the sorting means.

A manufacturing apparatus of stick food according to another aspect of the present invention includes the sorting device described above; and a cutting device for cutting a linked food stock at its tied portions and for continuously feeding cut pieces obtained by cutting to the transfer path 41b of the sorting device, and the sorting device includes returning means for returning the insufficiently cut product sorted by the sorting means to the cutting device.

Preferably, the conveying means includes a first conveying unit including a first placing unit and a plurality of slender grooves arranged in parallel with the first placing unit for forward moving stick food pieces including those with different lengths A, B, and C (A > B > C) by dropping them into the plurality of slender grooves; a second conveying unit including a second placing unit and a plurality of slender grooves arranged in parallel with the second placing unit for forward moving stick food pieces including those with lengths B and C by dropping them into the plurality of slender grooves; and vibrating means for producing vibration for moving the stick food, and in order to sort the stick food piece with the length A from the other stick food pieces with the lengths B and C in the stick food, the sorting means includes a first receiving plate arranged in front of the first placing unit and having a gap capable of dropping stick food pieces with the lengths B and C for receiving stick food pieces with the length A; and a second receiving plate arranged in front of the second placing unit and having a gap capable of dropping the stick food piece with the length C for receiving stick food pieces with the length B.

Preferably, the stick food sorting further includes a support body arranged on a stand with snapping means therebetween, and the conveying means includes a first conveying unit arranged on the support body including a first placing unit and a plurality of slender grooves arranged in parallel with the first placing unit for forward moving stick food pieces including those with different lengths A, B, and C (A > B > C) by dropping them into the plurality of slender grooves; a second conveying unit including a second placing unit and a plurality of slender grooves arranged in parallel with the second placing unit for forward moving stick food pieces including those with lengths B and C by dropping them into the plurality of slender grooves; and vibrating means for vibrating the support body, and in order to sort the stick food piece with the length A from the other stick food pieces with the lengths B and C in the stick food, the sorting means includes a first receiving plate arranged in front of the first placing unit and having a gap capable of dropping stick food pieces with the lengths B and C for receiving stick food pieces with the length A; and a second receiving plate arranged in front of the second placing unit and having a gap capable of dropping the stick food piece with the length C for receiving stick food pieces with the length B.

Preferably, guide bars for guiding stick food are arranged above the end adjacent to the first placing unit of the first receiving plate and above the end adjacent to the second placing unit of the second receiving plate, respectively.

According to the stick food sorting device of the present invention, stick food conveyed by the conveying means can be automatically sorted into stick food normally-cut at tied portions and insufficient cut product by the sorting device.

The stick food sorting device of the present invention, as described above, conveys stick food pieces obtained by cutting a number of linked food pieces connected together with tied portions therebetween at the tied portions using a cutting device, and includes conveying means having a transfer path with the width lager than the diameter of the stick food piece as well as smaller than the longitudinal length of the stick food piece and the sorting means for sorting out an insufficient cut product in which two or more stick food pieces are connected together with tied portions therebetween from stick food fed from an outlet of the transfer path. Thereby, normal stick food can be automatically sorted out of the insufficient cut product by only supplying pieces cut by the cutting device onto the transfer path without visual observation, improving work efficiency.

According to the stick food sorting device of the present invention, the sorting means is arranged in a direction perpendicular to the conveying direction of the transfer path at a position located upstream of the transfer path from a future dropping position of the stick food piece fed from an outlet of the transfer path as well as at a future dropping position of the insufficiently cut product, and while a sorting roller with the upper end rotating toward upstream of the transfer path is used as the sorting means, so that the insufficiently cut product dropped on the sorting roller is flipped upstream of the transfer path by the rotating force of the roller, thereby more securely sorting out the normal stick food from the insufficient cut product.

Furthermore, according to the stick food sorting device of the present invention, there is also provided a comb receiving unit disposed on the outlet side of the transfer path and having a plurality of trough transfer paths arranged in parallel for receiving tied portions of the insufficiently cut product fed from the outlet side of the transfer path in a stretching state across two trough transfer paths so as to prevent the insufficiently cut product from being mixed with the stick food pieces fed from the transfer path as well as to allow the insufficiently cut product to flow together with the insufficiently cut product sorted by the sorting means, so that the insufficiently cut product that cannot be sorted by the sorting means because it is conveyed in a state stretching over across two trough transfer paths can also be prevented from mixing with the normal stick food.

On the other hand, the manufacturing apparatus of stick food includes the sorting device according to the present invention described above and a cutting device for cutting a linked food stock at its tied portions and for continuously feeding cut pieces obtained by cutting to the transfer path of the sorting device, and the sorting device includes returning means for returning the insufficiently cut product sorted by the sorting means to the cutting device, so that the insufficiently cut product is returned to the cutting device by the returning means so as to again cut tied portions, enabling the normal food pieces to be manufactured more efficiently.

Also, according to the stick food sorting device of the present invention, stick food with a desired length (A, B, or C) can be automatically sorted from stick food pieces including those with different lengths A, B, and C (A > B > C) securely and efficiently.

Since the first and second placing units are provided with a plurality of slender grooves arranged in parallel therewith, end portions of stick food pieces including those with different lengths A, B, and C (A > B > C) dropped into the slender grooves by the vibration of vibrating means are forcedly directed in the downstream moving direction, so that the transfer from the placing unit to the receiving plate can be smoothly performed during the sorting.

Furthermore, according to the stick food sorting device of the present invention, by providing the guide bars for guiding stick food, during transferring from the first conveying unit to the first receiving plate as well as from the second conveying unit to the second receiving plate, off-balanced dropping stick food pieces can be forward guided as supplement in touch with the guide bars, further ensuring the sorting of stick food with different lengths.

### BRIEF DESCRIPTION OF THE DRAWINGS

Fig. 1 is a front view of a manufacturing apparatus of stick food according to an embodiment of the present invention;
Fig. 2 is a partially cutaway front view of a stick food sorting device of the manufacturing apparatus of Fig. 1;
Fig. 3 is a partially cutaway plan view of the stick food sorting device of the manufacturing apparatus of Fig. 1;
Fig. 4 is an enlarged plan view of a feed roller of the stick food sorting device of the manufacturing apparatus of Fig. 1;
Fig. 5 is an explanatory view for illustrating a conveying state of cut pieces along a transfer path;
Fig. 6 is an explanatory view for illustrating a sorting state of the cut pieces;
Fig. 7 is a front view of a stick food sorting device according to another embodiment of the present invention;
Fig. 8 is a plan view of the stick food sorting device according to the embodiment of the present invention;
Fig. 9 is an explanatory view at the position V-V of Fig. 8;
Fig. 10 is an explanatory view at the position W-W of Fig. 8;
Figs. 11A and 11B are explanatory views showing the relationship between a slender groove and a sausage;
Figs. 12A to 12C are explanatory views showing the relationship between a sausage, a gap X, and a guide bar 701; and
Fig. 13 is an explanatory view of a conventional sausage cutting device.

### DESCRIPTION OF THE PREFERRED EMBODIMENTS

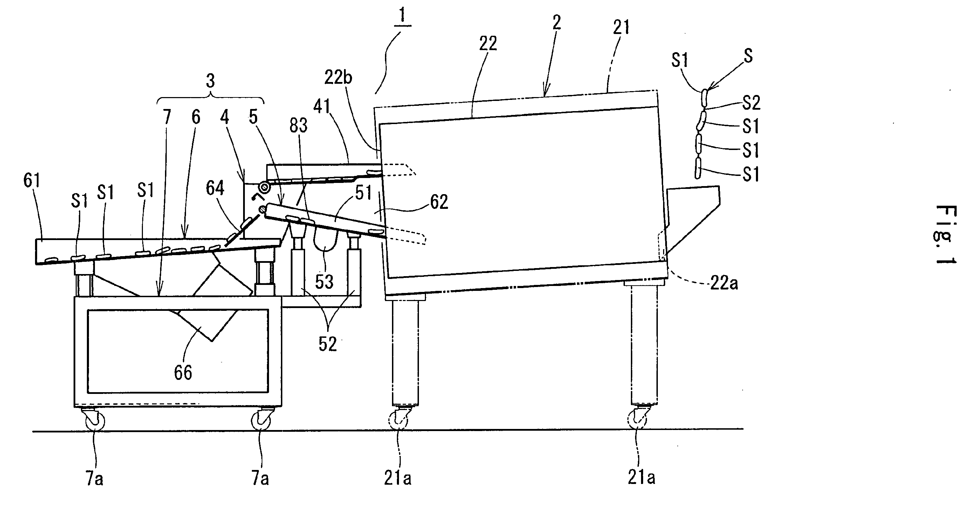

Figs. 1 to 6 show an embodiment of a manufacturing apparatus of stick food according to the present invention.

A stick food manufacturing apparatus 1, as shown in Figs. 1 to 3, is a manufacturing apparatus of sausages as stick food, and includes a cutting device 2 and a sorting device 3 for sausages.

The cutting device 2 includes a stand 21, a rotary drum 22, and numerous cutter support fixtures 23 which are substantially the same as the support fixture G shown in Fig. 13B in structure.

The rotary drum 22 is rotatably supported on the stand 21 and its rotating shaft is inclined.

In the higher side of the inclination, an inlet 22a is arranged for linked sausages S as a stock of linked stick food, and in the lower side of the inclination a discharge outlet is provided for sausages S1 as stick food obtained by cutting.

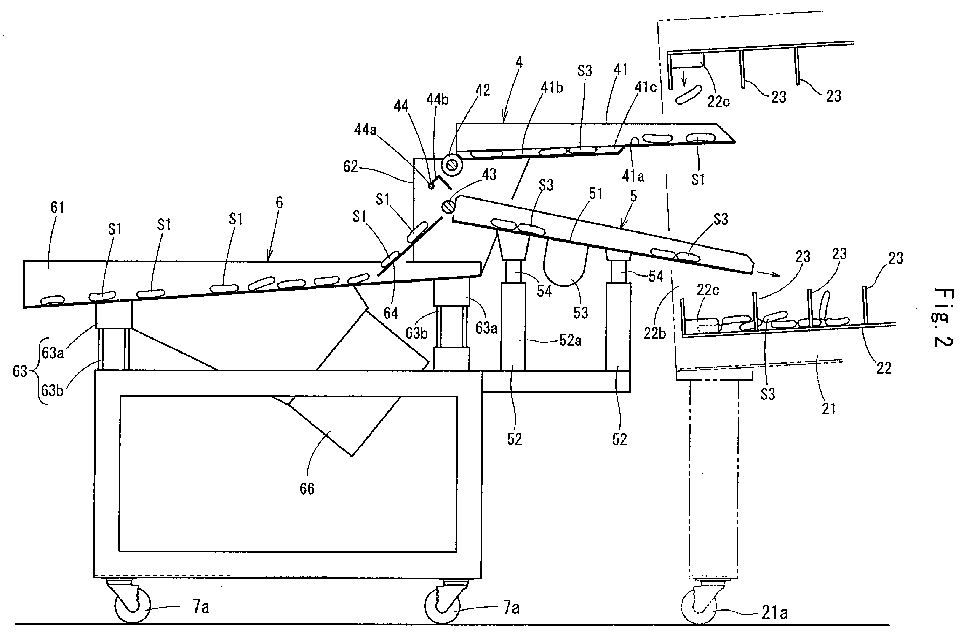

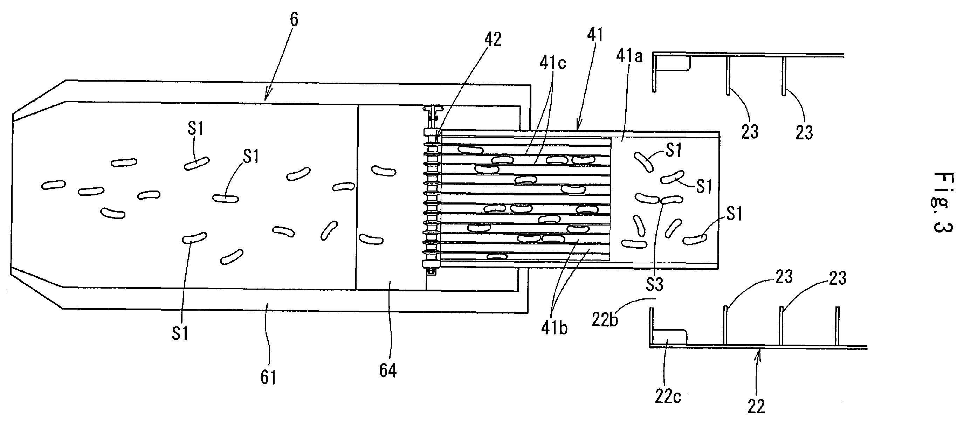

In Figs. 2 and 3, a scooping blade 22c is for scooping the sausage S1 and the linked sausages S up.

The sausage sorting device 3 includes a sorting unit 4, a return unit 5, a product receiver 6, and a stand 7.

The sorting device 4 includes a transfer stand 41, a feed roller 42, a sorting roller 43, and a comb sorter 44.

The transfer stand 41 formed by pressing stainless steel includes a sausage receiver 41a and a plurality of transfer paths 41b and is supported by the stand 7 raised from a trough transfer unit 61 via the stand 7.

That is, the flat sausage receiver 41a faces the rotary drum 22 through a discharge outlet 22b so as to receive the sausage S1 fed toward the discharge outlet 22b while being cut. The angle of inclination of the sausage receiver 41a is not specifically limited as long as the sausage S1 is preferably conveyed toward the transfer paths 41b; however, it is preferable that the angle of inclination be downward inclined at about 0 to 3° toward the transfer paths 41b.

The transfer paths 41b are flat plates concavely arranged downward at equal lateral pitches. Each transfer path 41b is a groove with a substantially U-shaped cross-section and substantially the same downward inclination as that of the sausage receiver 41a. The top of a crest 41c between the transfer paths 41b is flush with the sausage receiver 41a. The width of each transfer path 41b is larger than the diameter of the sausage S1 and smaller than the longitudinal length of the sausage S1, preferably it is slightly larger than the diameter of the sausage S1. When the diameter of the sausage S1 is 20 mm, the width of each transfer path 41b is preferably about 30 to 40 mm.

The feed roller 42 has smaller rollers 42a arranged at the same equal lateral pitches as those of the transfer paths 41b, and feeds the sausages S1 conveyed from the transfer paths 41b in the conveying direction. As the diameter of the feed roller 42, when the diameter of the sausage S1 is 20 mm, it is preferable that the diameter of a larger roller 42b be about 60 mm and that of the smaller roller 42a be about 30 mm. At this time, the rotation speed of the feed roller 42 is preferably about 90 rpm.

The sorting roller 43 is arranged in a direction perpendicular to the conveying direction of the transfer paths 41b at a position located upstream of the transfer paths 41b from a future dropping position of the normal sausage S1, which is cut at each side tied portions and fed by the feed roller 42 so as to drop, as well as at a future dropping position of an insufficiently cut sausage S3 fed and mixed with the sausages S1. To an end portion of the sorting roller 43 arranged to pass through a hole (not shown) formed in a support plate 62, a driving force of a driving motor (not shown) is transferred, so that the sorting roller 43 is rotated upstream the transfer paths 41b, i.e., rotated reversely to the feed roller 42, so as to feed the insufficiently cut sausage S3 dropped on the sorting roller 43 toward the return unit 5 which will be described later.

In addition, when the diameter of the sausage S1 is 20 mm, the diameter of the sorting roller 43 is preferably about 30 mm and the rotating speed is preferably about 20 rpm at this time.

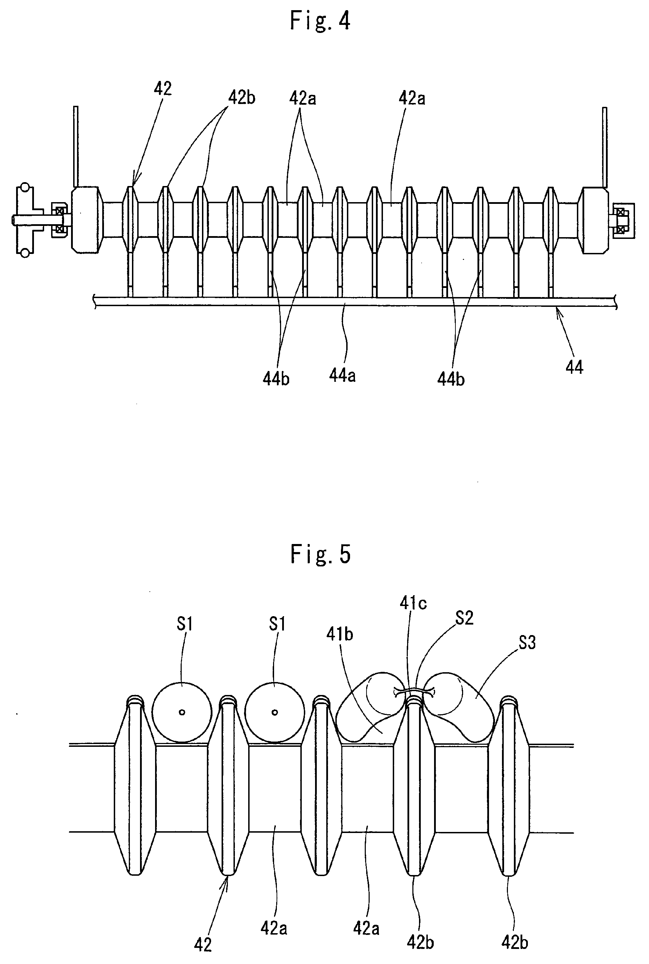

The comb sorter 44 arranged at a position higher than the sorting roller 43, as shown in Figs. 2 and 4, includes a support bar 44a arranged in parallel with the sorting roller 43 and a plurality of comb portions 44b extending toward the transfer stand 41 with substantially chevron-shaped cross-sections and arranged at positions of the support bar 44a respectively corresponding to the joint between the transfer paths 41b.

The end of the comb portion 44b is arranged at a position adjacent to the cutting device 2 and remote from the rotational axis of the sorting roller 43.

The return unit 5 includes a return unit body 51 and support legs 52.

The return unit body 51 is formed by pressing a stainless steel plate to have a substantially horseshoe-shape with one end arranged at a position slightly lower than the sorting roller 43 and inclined downward toward the other end. The other end faces the inside of the rotary drum 22 via the discharge outlet 22b. The return unit body 51 is provided with vibration applying means 53 fixed on the bottom surface.

The support leg 52 includes a leg body 52a supported on the stand 7 at the lower end and an elastic cushioning material 52b interposed between the leg body 52a and the return unit body 51 such as a coil spring and rubber.

The product receiver 6 includes a chute 64, a trough 61, and support legs 63.

The chute 64 is formed of a stainless steel plate with the upper end arranged at a position receiving the sausage S1 fed from the feed roller 42 and being downward sloped at about 15 to 30° so as to drop the received sausage S1 along the slope onto the trough 61.

The trough 61 is supported on the stand 7 by support legs 63 with one end arranged at a position receiving the sausage S1 dropped from the lower end of the chute 64 and being downward sloped at about 0 to 3° toward the other end.

The support leg 63 includes a leg body 63a supporting the trough 61 at the upper end and an elastic cushioning material 63b interposed between the leg body 63a and the stand 7 such as a coil spring and rubber.

The trough 61 is provided with vibration applying means 66 disposed on the bottom surface for applying vibration to the trough 61.

The vibration applying means 66 applies vibration not only to the trough 61 but also to the transfer stand 41 via the support plate 62.

The stands 21 and 7 are provided with casters 21a and 7a at their lower ends, respectively.

Next, operation of the manufacturing apparatus 1 will be described in detail.

First, the linked sausages S put in the rotary drum 22 of the cutting device 2 through the inlet 22a are gradually conveyed toward the discharge outlet 22b following the rotation of the rotary drum 22; meanwhile the tied portions S2 are cut with the flat blade cutters supported to the support fixtures 23 within the rotary drum 22 so as to gradually shorten the linked sausages S. Then, in the vicinity of the discharge outlet 22b, almost all the linked sausages S become the normal sausage S1 which is cut at each side tied portions so as to be received on the sausage receiver 41a of the transfer stand 41.

The sausage S1 received on the sausage receiver 41a is gradually conveyed toward the transfer paths 41b due to the vibration applied from the vibration applying means 66 so as to enter any one of the transfer paths 41b, directing its longitudinal length in the conveying direction. Most insufficiently cut sausages S3 included in the sausages S1 enter the transfer paths 41b similarly to the normal sausages; as shown in Fig. 5, its tied portion S2 runs upon the crest 41c between the transfer paths 41b, so that one sausage may enter one transfer path 41b while the other sausage may enter the other transfer path 41b with the tied portion S2 therebetween.

The sausage S1 entering the transfer path 41b is further conveyed downstream due to the vibration of the transfer stand 41, and is fed in the conveying direction with the feed roller 42 provided in the outlet of the transfer paths 41b.

Among the sausages S1 fed with the feed roller 42, the normal sausage S1 drops on the chute 64 across the sorting roller 43 so as to slide down along the upper surface of the chute 64 toward the trough 61.

The normal sausage S1 received on the trough 61 is conveyed downstream due to the vibration of the trough 61, and is fed to the next process such as packaging.

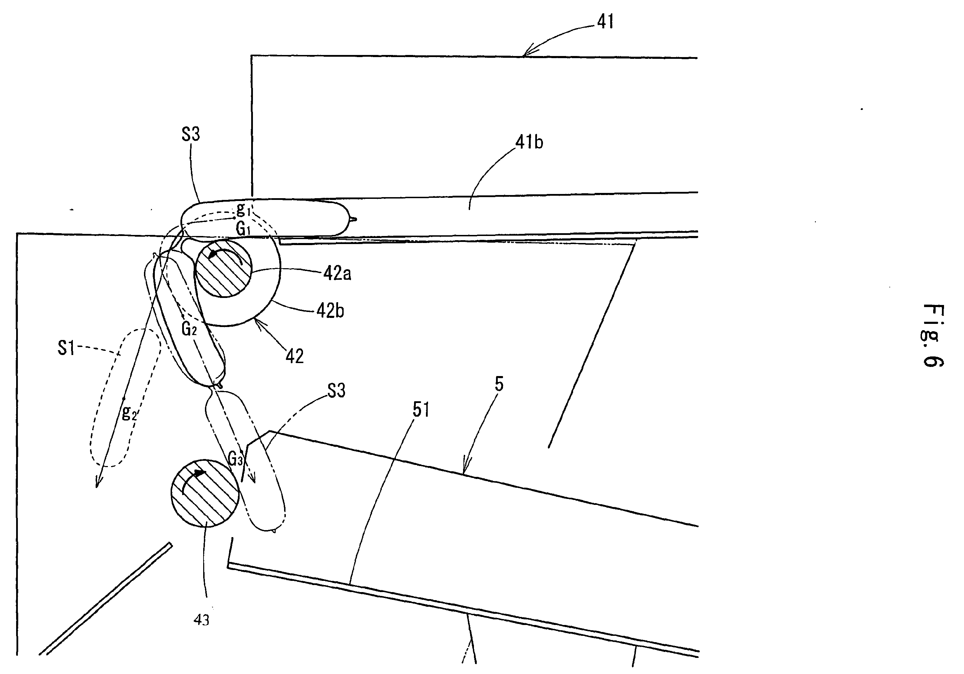

On the other hand, in the insufficiently cut sausages S3 entering the transfer path 41b so as to be conveyed to the outlet of the transfer paths 41b, the front sausage S1 arriving at the outlet of the transfer path 41b is to be fed with the feed roller 42 in the conveying direction; however, since it is connected to the trailing sausage S1 remaining in the transfer path 41b with the tied portion S2 therebetween, as shown in Fig. 6, the front sausage S1 does not ride across the sorting roller 43 unlike the normal sausage S1 so as to be taken in under the feed roller 42. When the trailing sausage S1 is further conveyed toward the outlet of the transfer path 41b, the front sausage S1 in that state is received onto the sorting roller 43, and is fed toward the cutting device 2, resulting being received on the return unit body 51.

Meanwhile, in the insufficiently cut sausages S3 conveyed to the outlet of the transfer paths 41b so as to have a state that the tied portion S2 runs upon the crest 41c between the transfer paths 41b, so that one sausage enters one transfer path 41b while the other sausage enters the other transfer path 41b with the tied portion S2 therebetween, since there is provided the comb portion 44b of the comb sorter 44 arranged in front of the crest 41c, the tied portion S2 is received on an inclined portion 44c of the comb portion 44b in the side of the transfer path 41b so as to drop along the inclination, and is received on the return unit body 51.

The insufficiently cut sausages S3 received on the return unit body 51 in such a manner are conveyed downstream the return unit body 51 due to its vibration, and returned into the rotary drum 22 through the discharge outlet 22b.

The insufficiently cut sausages S3 returned within the rotary drum 22 are cut at the tied portion S2 in the rotary drum 22 with a flat blade cutter supported to the support fixtures 23, and are received on the sausage receiver 41a of the transfer stand 41 for sorting.

As described above, according to the sausage sorting device 3, the normal sausage S1 can be securely sorted from the insufficiently cut sausage S3 without human labor such as visual observation.

Also, according to the sausage manufacturing apparatus 1 having the sausage sorting device 3, the insufficiently cut sausages S3 sorted by the sausage sorting device 3 are returned into the rotary drum 22 of the cutting device 2, so that the normal sausages S1 can be manufactured more efficiently.

The present invention is not limited to the embodiment described above. For example, sausages are conveyed due to vibration according to the embodiment; alternatively, a belt conveyor may be used. When a belt conveyor is used for the transfer path, the feed roller may be eliminated.

According to the embodiment, the vibration applying devices are provided in the trough 61 and the return unit body 51, respectively; however, vibration may also be applied to the trough 61 and the return unit body 51 by one vibration applying means.

Furthermore, according to the embodiment, the insufficiently cut sausages are returned into the rotary drum 22 through the discharge outlet; alternatively, the insufficiently cut sausages may be received at the outlet of the return unit body 51 on a belt conveyor so as to return them to the inlet, or they may be received in a container so as to be cut by man power.

According to the embodiment, stick food is the sausage S1; alternatively, the device may be used for stick cheese.

### (Second Embodiment)

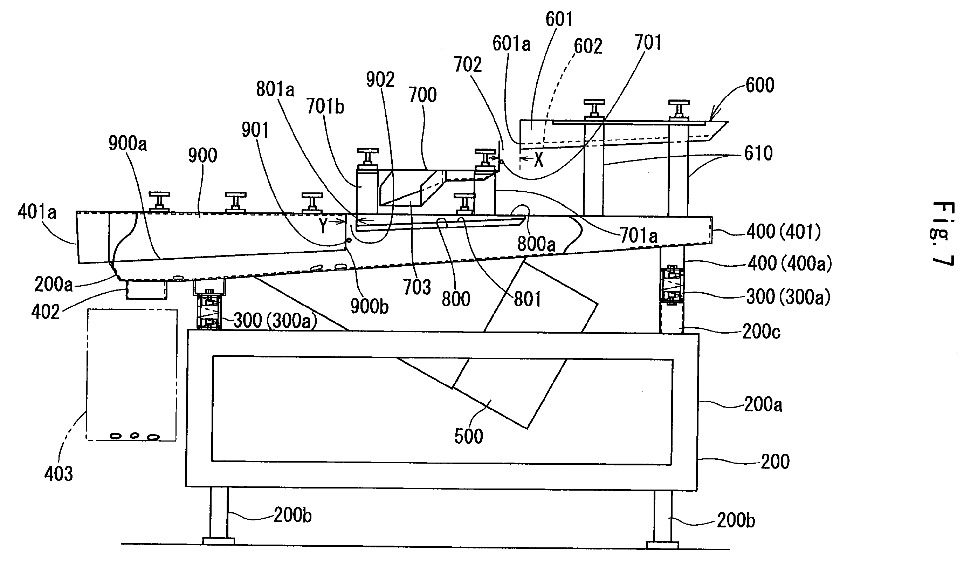

Next, a stick food sorting device shown in Figs. 7 to 12C will be described.

In a stick food sorting device 100 shown in Figs. 7 to 12C, among mixed stick food pieces with different lengths A, B, and C (A > B > C), the stick food pieces with a predetermined length B are sorted from the stick food pieces with other lengths A and C. The stick food sorting device 100 includes a stand 200, snapping means 300, a support body 400, vibrating means 500, first conveying unit 600, a first receiving plate 700, second conveying unit 800, and a second receiving plate 900.

The stick food sorting device 100 can separate stick food pieces with different lengths A, B, and C, respectively. As stick food pieces with different lengths A, B, and C, the sausages S1 are exemplified.

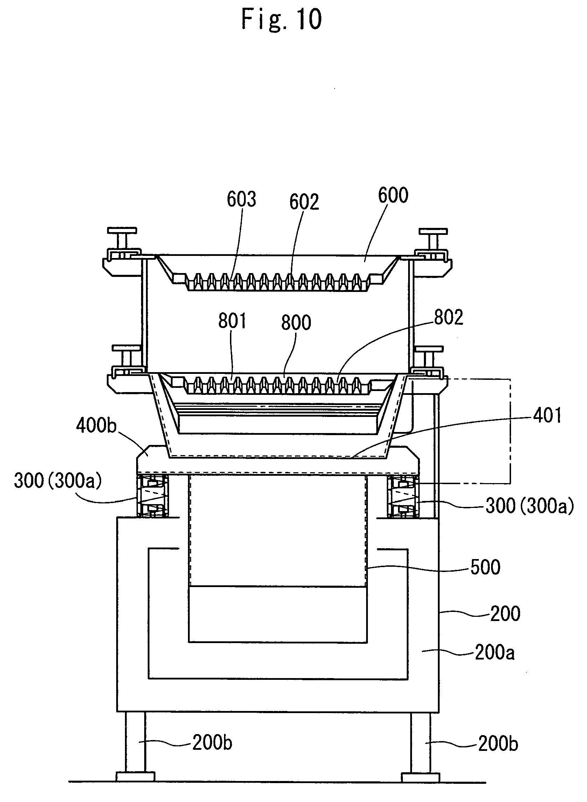

More specifically, first, in the stand 200 (see Figs. 7 and 10), a rectangular parallelepiped frame 200a is supported to support legs 200b at four corners, and support units 200C are provided at one end (upstream of the stick food flow) of the frame 200a.

As the snapping means 300, a coil spring is used, and the coil springs 300a are directly arranged on the upper end of the support units 200c and on both downstream sides of the frame 200a, respectively.

The support body 400 includes both lateral beams 400a and 400b and a sliding portion 401 with a higher end on the upstream side and a lower end on the downstream side. The lateral beams 400a and 400b are arranged on the each-side coil springs 300a of the upstream and downstream ends of the frame 200a, respectively, so as to stretch across thereon. The sliding portion 401 is supported on the lateral beams 400a and 400b in the vicinities of both ends of the bottom surface of the sliding portion 401, respectively.

To the sliding portion 401, the first conveying unit 600, the first receiving plate 700, the second conveying unit 800, and the second receiving plate 900 are fixed, which will be described later.

At the center of the bottom surface of the support body 400, vibrating means 500 is arranged with the support body 400 therebetween for vibrating the first conveying unit 600, the first receiving plate 700, the second conveying unit 800, and the second receiving plate 900.

Although not shown, the vibrating means 500 vibrates the sliding portion 401 by rotating an eccentric cam abutting the sliding portion 401 with a motor so as to simultaneously vibrate the first conveying unit 600, the first receiving plate 700, the second conveying unit 800, and the second receiving plate 900.

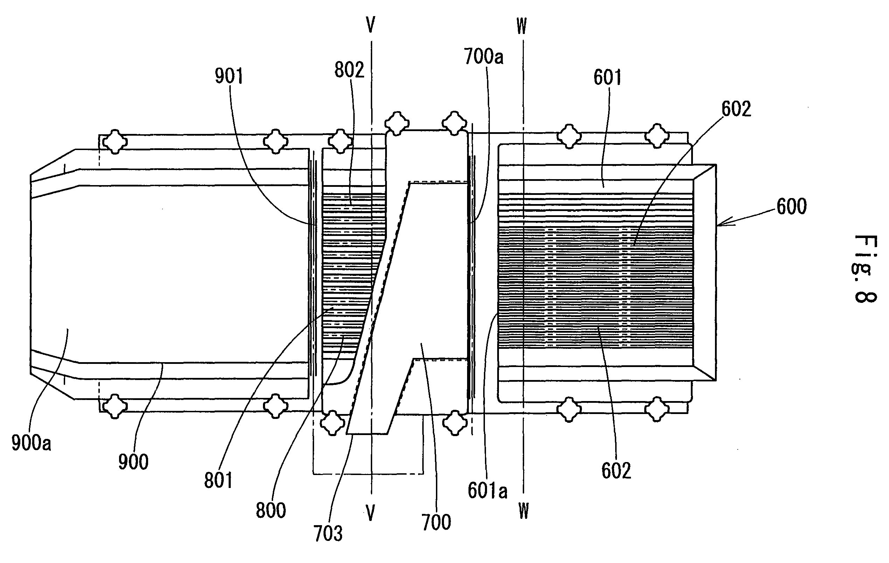

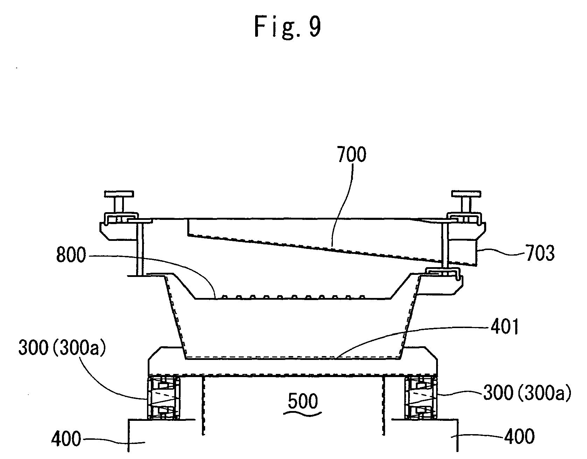

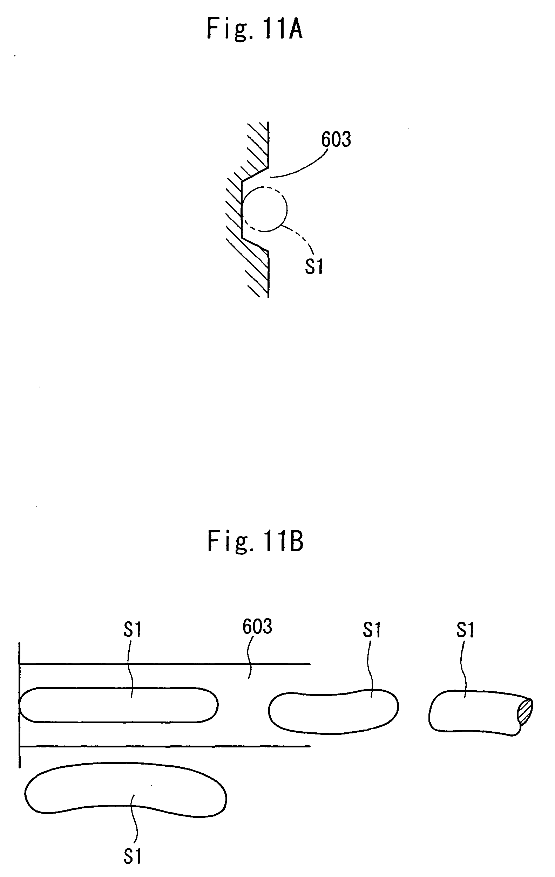

The first conveying unit 600 (see Fig. 7) is arranged upstream of the sliding portion 401 with a plurality of support columns 610 therebetween. In the first conveying unit 600 (see Figs. 8 and 9), on the bottom surface of a first placing unit 601 with a concave cross-section, a plurality of slender grooves 602 are juxtaposed. The slender grooves 602 are longitudinal channels formed by continuous corrugation for sliding the sausage S1 so as to move downstream by the vibration of the vibrating means 500. The width of the slender groove 602, as shown in Figs. 11A and 11B, is larger than the diameter of the sausage S1 so as to have a size sufficient for sliding not only straight sausages but also curved sausages therein.

The first receiving plate 700 is provided downstream of the first placing unit 601 of the first conveying unit 600 (see Fig. 7), which has a gap X (A > X > B > C) for dropping the sausages S1 with lengths B and C and receiving the sausages S1 with a length A and is arranged at an intermediate position of the sliding portion 401 with support columns 701a and 701b therebetween.

A guide bar 701 is provided above the end portion 700a of the first receiving plate 700 adjacent to the first placing unit 601. The guide bar 701 receives the end portion of the sausage S1 with a length A, which has moved from the first placing unit 601 by the vibration, so as to prevent it from dropping through a clearance 702 of the gap X, even when the sausage is out of balance during being fed from the first placing unit 601, so as to securely transfer it from the first placing unit 601 to the first receiving plate 700.

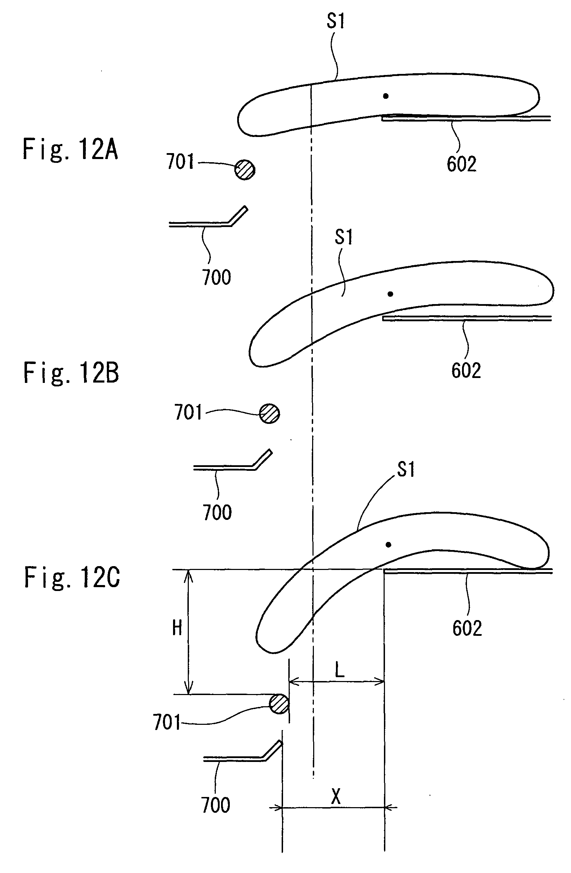

Furthermore, the sausage S1 made of natural gut is frequently curved rather than being straight, and as shown in Figs. 12A to 12C, when the sausage S1 is fed from the first placing unit 601, the curved sausage S1 may drop through the gap X before it is transferred to the first receiving plate 700; whereas, the guide bar 701 abuts the end portion of the curved sausage S1 so as to transfer it to the first receiving plate 700, thereby securely feeding even the curved sausage to the first receiving plate 700. Also, by changing dimensions H and L in Fig. 12C, the curvature of the sausage S1 can be more securely corresponded.

The first receiving plate 700 (see Figs. 7 and 9) is a modified sliding way for sliding the sausage S1 with a length A by the vibration so as to lead it sideways. The first receiving plate 700 includes a discharge outlet 703 on its side for discharging the sausage S1 with a length A therethrough so as to be recovered in a collection box (not shown).

The second conveying unit 800 for receiving the sausages S1 with lengths B and C dropped through the clearance 702, with one end 800a located underneath the clearance 702, is arranged along the upper portion of the sliding portion 401.

The second conveying unit 800 is the same in structure as the first conveying unit 600 described above (see Figs. 7, 8, and 10), and on the bottom surface of a second placing unit 801 with a concave cross-section, a plurality of slender grooves 802 are juxtaposed. The sausages with lengths B and C drop into the slender grooves 802 due to the vibration and slide to be downstream moved.

The second receiving plate 900 is provided downstream of the second placing unit 801 of the second conveying unit 800, which has a gap Y (B > Y > C) for dropping the sausages with a length C and receiving sausages with a predetermined length B and a bottom plate 900a inclined downstream of the sliding portion 401.

A guide bar 901 having a function similar to that of the guide bar 701 is provided above the end portion 900b of the second receiving plate 900 adjacent to the second placing unit 801. The guide bar 901 receives the end portion of the sausage with the length B, which has moved from the second placing unit 801 by the vibration, so as to prevent it from dropping through a clearance 902 of the gap Y, even when the sausage is out of balance during being fed from the second placing unit 801, so as to securely transfer it to the second receiving plate 900.

The second receiving plate 900 is like a sliding way for forward sliding the sausage with the predetermined length B received from the second conveying unit 800.

The sausage with the length C (shortest length) dropping through the clearance 902 drops on the sliding portion 401. The sliding portion 401 includes a discharge outlet 402 arranged adjacent to the lower end 401a for discharging the sausage with the length C therethrough so as to be recovered in a collection box 403.

When stick food pieces (sausages) with a predetermined length are sorted from sausages including those with different lengths A, B, and C (A > B > C) by the stick food sorting device 100 structured as described above, the vibrating means 500 is first operated so as to simultaneously vibrate the first conveying unit 600, the first receiving plate 700, the second conveying unit 800, and the second receiving plate 900 via the support body 400.

Thereafter, the sausages including those with different lengths A, B, and C (A > B > C) are placed on the first placing unit 601 of the first conveying unit 600.

These sausages are dropped into the slender grooves 602 of the first placing unit 601 by the vibration so as to slide and move toward the first receiving plate 700.

These sausages arriving at an end portion 601a of the first placing unit 601 are further conveyed toward the first receiving plate 700. At this time, the sausages with lengths B and C, which are shorter than the gap X between the end portion 601a of the first placing unit 601 and the end portion 700a of the first receiving plate 700, drop down on the second placing unit 801 of the second conveying unit 800.

The sausage with the length A, longer than the gap X, is transferred to the first receiving plate 700 by the assistance of the guide bar 701 so as to be discharged from the discharge outlet 703 by slippage due to the vibration.

On the other hand, the sausages with lengths B and C dropped on the second placing unit 801 of the second conveying unit 800 drop into the slender grooves 802 of the second placing unit 801 by the vibration and slide along thereon so as to be moved toward the second receiving plate 900.

The sausages with lengths B and C arriving at an end 801a of the second placing unit 801 are fed toward the second receiving plate 900. At this time, the sausage with the length C, shorter than the gap Y between the end 801a of the second placing unit 801 and an end 900a of the second receiving plate 900, drops down on the sliding portion 401.

The sausage with the length B, longer than the gap Y, is transferred to the second receiving plate 900 by the assistance of the guide bar 901 so as to be discharged from the discharge outlet 402 by slippage due to the vibration.

On the other hand, the sausage with length C dropped on the sliding portion 401 slides by the vibration so as to be discharged from the discharge outlet 402.

According to the sorting device 100 described above, sausages with a reasonable length (a predetermined length) can be automatically and securely sorted from sausages including those with different lengths A, B, and C (A > B > C) without human labor.

The first conveying unit 600 and the second conveying unit 800 may include a belt having a plurality of slender grooves juxtaposed on the surface. End portions of the first receiving plate 700 and the second receiving plate 900 respectively adjacent to the first placing unit 601 and to the second placing unit 801 may be continuously corrugated so that slightly curved stick food pieces transferred from the first placing unit 601 and to the second placing unit 801 abut the convex portions so as to be smoothly transferred and sorted.

The stick food sorting device shown in Figs. 7 to 12C may preferably be arranged to follow the stick food sorting device shown in Figs. 1 to 6.

## Claims

1. A sorting device for sticks of food, comprising conveying means including a transfer path for conveying food pieces obtained by cutting linked food pieces connected together with tied portions therebetween at the tied portions using a cutting device, **characterized by**:
sorting means for sorting defective food from the non-defective food pieces conveyed by the conveying means.

2. The device according to Claim 1, **characterized in that** the width of the transfer path of the conveying means is lager than the diameter of the food piece as well as smaller than the longitudinal length of the food piece, and that the sorting means sorts out an insufficient cut product in which two or more food pieces are connected together with tied portions therebetween.

3. The device according to Claim 2, **characterized in that** the sorting means is arranged in a direction perpendicular to the conveying direction of the transfer path at a position located upstream of the transfer path from a future dropping position of the food piece fed from an outlet of the transfer path as well as at a future dropping position of the insufficiently cut product, and
wherein the sorting means includes a sorting roller with the upper end rotating toward upstream of the transfer path.

4. The device according to Claim 2 or 3, **characterized by** a comb receiving unit disposed on the outlet side of the transfer path and having a plurality of trough transfer paths arranged in parallel for receiving tied portions of any insufficiently cut product not sorted by the sorting means and fed from the outlet side of the transfer path in a stretching state across two trough transfer paths so as to prevent the insufficiently cut product from mixing with the food pieces fed from the transfer path as well as to allow the insufficiently cut product from the comb receiving unit to flow together with the insufficiently cut product sorted by the sorting means.

5. A manufacturing apparatus for sticks of food comprising:
the sorting device according to any one of Claims 2 to 4; and
a cutting device for cutting a linked food stock at its tied portions and for continuously feeding cut pieces obtained by the cutting to the transfer path of the sorting device,
**characterized in that** the sorting device includes returning means for returning the insufficiently cut product sorted by the sorting means to the cutting device.

6. The device according to Claim 1, **characterized in that** the conveying means includes:
a first conveying unit including a first placing unit and a plurality of slender grooves arranged in parallel with the first placing unit for forward moving food pieces including those with different lengths A, B, and C (A > B > C) by dropping them into the plurality of slender grooves;
a second conveying unit including a second placing unit and a plurality of slender grooves arranged in parallel with the second placing unit for forward moving food pieces including those with lengths B and C by dropping them into the plurality of slender grooves; and
vibrating means for producing vibration for moving the food pieces, and
that the sorting means includes:
a first receiving plate arranged in front of the first placing unit and having a gap capable of dropping food pieces with the lengths B and C for receiving food pieces with the length A; and
a second receiving plate arranged in front of the second placing unit and having a gap capable of dropping the food piece with the length C for receiving food pieces with the length B,
whereby the sorting means sorts the food piece with the length A from the other food pieces with the lengths B and C in the stick food.

7. The device according to Claim 1, further **characterized by** a support body arranged on a stand with snapping means therebetween, and
Further **characterized in that** the conveying means includes:
a first conveying unit arranged on the support body including a first placing unit and a plurality of slender grooves arranged in parallel with the first placing unit for forward moving stick food pieces including those with different lengths A, B, and C (A > B > C) by dropping them into the plurality of slender grooves;
a second conveying unit including a second placing unit and a plurality of slender grooves arranged in parallel with the second placing unit for forward moving food pieces including those with lengths B and C by dropping them into the plurality of slender grooves; and
vibrating means for vibrating the support body, and that the sorting means includes:
a first receiving plate arranged in front of the first placing unit and having a gap capable of dropping food pieces with the lengths B and C for receiving food pieces with the length A; and
a second receiving plate arranged in front of the second placing unit and having a gap capable of dropping the food piece with the length C for receiving food pieces with the length B,
whereby the sorting means sorts the food piece with the length A from the other food pieces with the lengths B and C in the food.

8. The device according to Claim 6 or 7, **characterized by** guide bars for guiding food pieces conveyed by vibration arranged above the end adjacent to the first placing unit of the first receiving plate and above the end adjacent to the second placing unit of the second receiving plate, respectively.
